# NEUE EUROPÄISCHE PATENTSCHRIFT

(11) **EP 1 188 634 B2**
(45) Veröffentlichungstag und Bekanntmachung des Hinweises auf die Entscheidung über den Einspruch: **21.12.2011**
(45) Hinweis auf die Patenterteilung: 06.02.2008
(21) Anmeldenummer: 01120604.2
(22) Anmeldetag: 29.08.2001
(51) Int. Cl.: B60T 13/68, B60T 13/26, B60T 13/66, B60T 7/20, B60T 8/32, B60T 15/20, B60T 15/24, B60T 8/34

(54) **Anhängerbremsventil für Anhängefahrzeuge mit elektronischer Bremsregelung und erweiterter Sicherheit des geparkten Anhängers**
Trailer brake valve for trailer vehicles with electronic brake control and increased security of the parked trailer
Soupape de frein de remorque pour remorques à commande de freinage électronique et à sécurité améliorée de remorque stationnée

(30) Priorität: 14.09.2000 DE 10045414; 13.08.2001 DE 10139757
(43) Veröffentlichungstag der Anmeldung: 20.03.2002
(60) Teilanmeldung: 08002081.1
(73) Patentinhaber: WABCO GmbH, 30453 Hannover (DE)
(72) Erfinder: Frank, Dieter, 30171 Hannover (DE); Koch, Jürgen, 30823 Garbsen (DE); Lindemann, Klaus, 30989 Gehrden (DE); Reinefeld, Wilfried, 30457 Hannover (DE); Sieker, Armin, 33611 Bielefeld (DE); Stender, Axel, 31787 Hameln (DE); Witte, Norbert, 31867 Lauenau (DE); Wolff, Hans-Klaus, 31832 Springe (DE)
(74) Vertreter: Schrödter, Manfred

(56) Entgegenhaltungen:
- EP-A1- 0 544 104
- EP-A1- 0 792 783
- WO-A1-00/30912
- DE-A- 19 818 982
- DE-A1- 2 326 708
- DE-A1- 2 810 850
- DE-A1- 3 031 105
- DE-A1- 3 144 027
- DE-A1- 3 605 444
- DE-A1- 4 227 084
- DE-B1- 2 349 649
- DE-C2- 3 207 793
- DE-C2- 3 703 536
- GB-A- 1 552 300
- US-A- 3 304 131
- US-A- 3 837 361
- US-A- 4 002 374

## Beschreibung

Die Erfindung betrifft eine Ventileinrichtung für einen Anhänger mit einem Anhängerbremsventil mit den in Anspruch 1 angegeben Merkmalen.

Ein derartiges Anhängerbremsventil ist aus der DE 28 10 850 A1 bekannt.

Bei dem bekannten Anhängerbremsventil für eine Zweileitungs-Druckmittelbremsanlage wird ein über den Kupplungsschlauch "Bremse" eingespeistes pneumatisches Bremssignal luftmengenverstärkt über ein im Anhängerbremsventil enthaltenes Relaisventil [dort Steuerdruckkammer (6), Relaiskolben (5), Relaiskolben-Fortsatz (28), Auslaßventil (26, 28), Einlaßventil (26, 27), Bremsdruckkammer (8)] als Bremsdruck an den Bremszylinder-Anschlüssen [dort (9), (10)] für die Bremszylinder ausgegeben.

Als weitere Funktion ist die Abrißsicherung für den Kupplungsschlauch "Vorrat" implementiert; wird der Anschluß für die Vorratsluft [dort automatischer Bremsanschluß (20)] drucklos, so wird der Notbremskolben [dort (22)] auf seiner Oberseite drucklos und der an seiner Unterseite anliegende Vorratsbehälterdruck schiebt ihn nach oben, so daß zunächst das Auslaßventil [dort (26, 28)] schließt und in der weiteren Aufwärtsbewegung das Einlaßventil [dort (26, 27)] geöffnet wird, so daß der am Vorratsbehälter-Anschluß [dort (33)] anstehende Druck auch in die Bremskammer übertragen wird und an den Bremszylinder-Anschlüssen anliegt.

In dem Anhängerbremsventil ist weiter die Funktion einer Voreilung des an die Bremszylinder übertragenen Bremsdruckes gegenüber dem pneumatischen Bremssignal integriert.

Bei der Realisierung eines Anhängerbremsventiles entsprechend der bekannten Schrift muß darauf geachtet werden, daß die konstruktionsbedingte Hysterese des Relaisventiles genügend klein wird, um sie tolerieren zu können. Hierzu muß eine gewisse Mindestbaugröße für den Relaiskolben gewählt werden, um den Einfluß der Reibkräfte, z. B. den Reibkraft-Einfluß durch die Kolbendichtung, zu reduzieren. Da die Baugröße eines derartigen Ventils die Kosten zumindest stark mitbestimmt, können diese bei diesem Konstruktionsprinzip nicht so stark reduziert werden, wie man dies eigentlich wünscht.

Aus der DE 30 31 105 A1 ist eine lastabhängig geregelte Zweileitungs-Anhängerbremsanlage bekannt, die aus einem als Sitzventil aufgebauten Notbremsventil [dort (3)] und einem lastabhängig gesteuerten Bremskraftregler [dort (5)] besteht, wobei dieser als Kombination von einem lastabhängig wirkenden Steuerteil mit einem luftmengenverstärkenden Relaisventil ausgebildet ist. Das Notbremsventil entspricht in seiner Funktionsweise der Abrißfunktion in einem üblichen Anhängerbremsventil, so daß die Funktion beider Ventile sinngemäß als die Funktion eines Anhängerbremsventiles mit lastabhängig gesteuerter Bremskraftregelung verstanden werden kann. Dies gilt vor allem, da auch ein Anhängerbremsventil z. B. nach der erstgenannten Schrift durch die Kombination dieser Ventile ersetzt werden kann [in beiden Fällen sind die Bremszylinder direkt mit dem Anhängerbremsventil bzw. mit der Kombination aus beiden Ventilen verbunden]. Diese Schrift zeigt wie auch die letztgenannte Schrift beispielhaft, daß zusammen mit Anhängerbremsventilen auch andere Funktionen verknüpft sein können, die als solche nicht die eigentliche Grundfunktion eines Anhängerbremsventiles, nämlich vereinfacht im wesentlichen diejenige der Abrißsicherung, betreffen.

Aus der DE 32 07 793 C2 ist bekannt, in einer 2-Leitungs-Wagenzugbremsanlage zusätzlich einen Drucksensor [dort (18)] vorzusehen, der über eine Zweigleitung [dort (17)] mit der Anhänger-Bremsleitung [dort (15)] für das Anhängerbremsventil [dort (10)] verbunden ist. Unter Verwendung des elektrischen Drucksensor-Signals wird in einer elektronischen Schalteinrichtung [dort (20)] zusammen mit anderen Sensorsignalen ein Regelsignal erzeugt, das in einem Drucksteuerventil [dort (14)] einen Bremsdruck für die Anhänger-Bremszylinder erzeugt. Durch das schnelle Durchschalten der Elektrik ist der so erzeugte Bremsdruck zeitlich voreilend gegenüber dem vom Anhängerbremsventil pneumatisch erzeugten Bremsdruck.

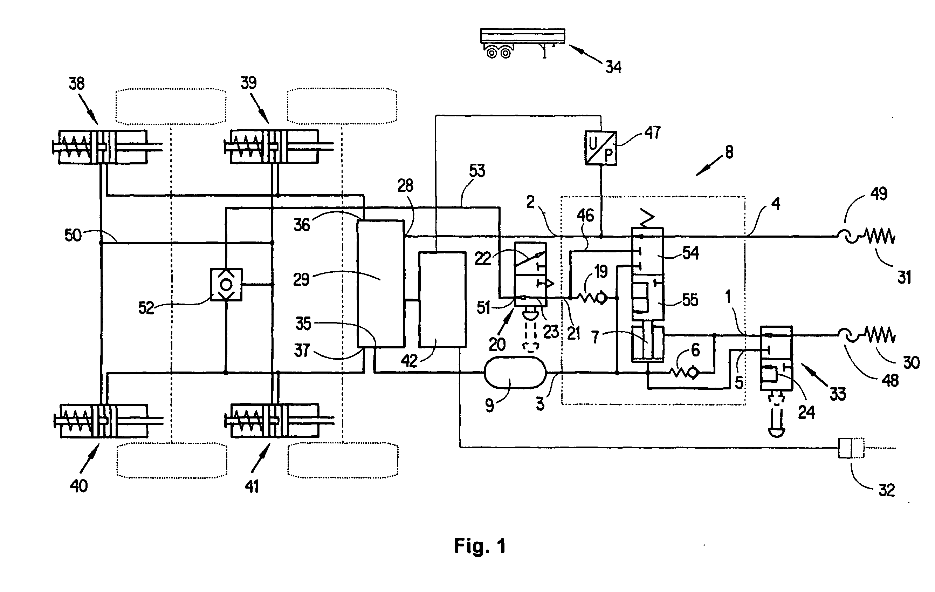

Aus der DE-A1-198 18 982 ist ein Park- und Rangierventil für Anhängerfahrzeuge mit Federspeicher-Feststellbremse bekannt, bei dem aus Kostengründen auf ein Anhängerbremsventil zunächst verzichtet wird und die durch den Verzicht wegfallende Luftmengenverstärkung des Anhängerbremsventils gegebenenfalls durch ein ABS-Relaisventil [dort (25)] realisiert ist. Anders als bei der Verwendung einer Kombination von einem Anhängerbremsventil mit einem auch als Doppel-Löseventil bezeichneten Kombi-Löseventil [das Zusammenwirken wird dort im Zusammenhang mit Fig. 1 erläutert], bei der ein Teil des Kombi-Löseventils zum Lösen der im Zusammenhang mit der Automatik-Bremsung des Anhängerbremsventils eingebremsten Betriebsbremse vorgesehen ist und der andere Teil des Kombi-Löseventils zum Lösen der Feststellbremse bei geparktem Anhänger dient, sind alle Lösefunktionen für die Bremsen des Anhängers in diesem einen Park- und Rangierventil vereinigt. Statt der Betätigung von zwei getrennten Betätigungsknöpfen für ein Kombi-Löseventil werden die Betriebsarten des Park- und Rangierventils nämlich "Parken", "Fahren" und "Rangieren" durch nur einen mit einem Betätigungsknopf versehenen Steuerschieber [dort (7)] vorgewählt, welcher zur Steuerung der jeweiligen Betriebsart drei Schaltpositionen einnehmen kann. Ein weiterer Unterschied des Park- und Rangierventils zu der Kombination Anhängerbremsventil/Kombi-Löseventil besteht darin, daß sowohl beim Parken als auch während der Fahrt bei einem Vorratsleitungs-Abriß [bzw. gelöster Vorrats-Kupplung] nicht die Betriebsbremse sondern die Feststellbremse wirksam wird. Insbesondere beim Vorratsleitungs-Abriß ist dies nachteilig, da wegen des Fehlens eines Betriebsbremsdruckes keine herkömmliche ABS-Bremsung mehr einsetzen kann und der Anhänger durch eine Vollbremsung ohne ABS leicht instabil werden kann. Bei dem Park- und Rangierventil ist das als Überlastschutz wirkende Wechselventil [Verhinderung einer Bremskraftaddition aus Federspeicher und Betriebsbremse] nicht wie in der Kombination Anhängerbremsventil/Kombi-Löseventil als separates Bauteil vorhanden [dort Fig. 1, (C)], sondern selbst in das Park- und Rangierventil integriert [dort (37)]. Dieser Einbauort des Überlast-Wechselventils läßt die Verwendung des Park- und Rangierventils in Anhängern mit elektronischer Bremsdruckregelung nicht zu; bei einem solchen Anhänger wird im EBS-Betrieb zur Bremsung das elektrische EBS-CAN-Bus-Signal verwendet, welches durch den Bremsdruckmodulator noch weiter stark beeinflußt wird, so daß der vom Bremsdruckmodulator ausgesteuerte Bremsdruck mitunter stark von dem pneumatischen Bremsdruck abweicht, welcher über die Bremsleitung an das Park- und Rangierventil angeschlossen ist. Schließlich widerspricht die Ventilbetätigung durch einen Steuerschieber dem derzeitigen Stand der Normungsüberlegungen für Doppel-Löseventile, deren Betätigungsweise und Funktionen in Zukunft durch eine DIN-Norm reglementiert sein werden.

Aus dem WABCO-Datenblatt "Wabcodruck 820 001 051 3/05.95" ist ein Doppel-Löseventil 963 001 051 0 bekannt. Da ein Doppel-Löseventil nach diesem Prinzip auch in Fig. 1 mit seinen Einzelheiten gezeigt ist, sind bei den folgenden Erläuterungen neben Bezugzeichen im dortigen Datenblatt auch entsprechende Bezugzeichen in Fig. 1 angegeben.

Das Doppel-Löseventil [dort (1) unter "Schema mit ALB-Anhänger-Bremsventil"] besteht aus einem Betriebsbrems-Löseventil [in Fig. 1 (33)], einem Parkventil [in Fig. 1 (20)] und einem dem Parkventil zugeordneten Rückschlagventil.

Das Betriebsbrems-Löseventil ist eingangsseitig pneumatisch [dort (1-1)] mit dem Vorrats-Kupplungskopf [in Fig. 1 (48)] verbunden und ausgangsseitig pneumatisch an dem Vorratsdruckanschluß [dort (1) des dortigen ALB-Anhänger-Bremsventils (2), in Fig. 1 (1) des Anhängerbremsventils (8)] angeschlossen.

In seiner Fahrtstellung [gezogene Stellung des dortigen schwarzen Betätigungsknopfes] hat das Betriebsbrems-Löseventil keinen Einfluß auf den Druck in den Betriebsbremskammern der Federspeicherbremszylinder; in seiner Lösestellung [nicht gezogene Stellung des schwarzen Betätigungsknopfes] bewirkt das Betriebsbrems-Löseventil das Lösen der Betriebsbremsen.

Das Betriebsbrems-Löseventil dient dazu, einen entkoppelten Anhänger zu bewegen, indem die automatische Bremse [ausgelöst durch die Vorratsleitungs-Abrißsicherung im Anhängerbremsventil] außer Kraft gesetzt wird; dies geschieht dadurch, daß in der Lösestellung Behälterdruck umgelenkt und am Versorgungsanschluß in das Anhängerbremsventil eingespeist wird [in Fig. 1 vom Löseanschluß (5) über den Druckkanal (24) zum Versorgungsanschluß (1)]; durch diese Druckumlenkung wird im Anhängerbremsventil simuliert, daß am Kupplungskopf für den Vorrats-Druckschlauch Druck anliegt.

Das Parkventil ist eingangsseitig pneumatisch [dort (1-2)] mit dem Vorratsbehälter verbunden, wobei der Anschluß über ein Rückschlagventil [in Fig. 1 (19)] erfolgt, und ausgangsseitig [dort (22)] ist das Parkventil pneumatisch über das Bremsüberlast-Wechselventil [dort (3), in Fig. 1 (52)] an die Lösekammern [dort (12)] der Federspeicherbremszylinder [in Fig. 1 (38, 39, 40, 41)] angeschlossen.

Das Parkventil entlüftet in seiner Parkstellung [gezogene Stellung des dortigen roten Betätigungsknopfes] die Lösekammern der Federspeicherbremszylinder, so daß die Feststellbremsen wirksam sind; in seiner Fahrstellung [nicht gezogene Stellung des roten Betätigungsknopfes] löst das Parkventil die Feststellbremsen durch Belüftung der Federspeicher-Lösekammern.

Das vorstehend erwähnte, in Richtung der Lösekammern der Federspeicherbremszylinder öffnende Rückschlagventil hält den hohen ursprünglichen Vorratsbehälter-Druck in den Lösekammern der Federspeicherbremszylinder, selbst wenn der Behälterdruck kurzzeitig einbricht. Derartige Einbrüche können bei Leckage oder intensiven ABS-Bremsungen auftreten.

Diese bekanntlich gesetzlich vorgeschriebene Funktion des Rückschlagventils wirkt auch bei einem abgestellten Anhängefahrzeug, das durch Abkuppeln in die automatische Bremsfunktion geht und bei dem das Parkventil in der Fahrstellung verbleibt.

Wenn ein derartig abgestelltes Anhängefahrzeug dann Behälterdruck verliert und die über das Rückschlagventil gesicherten Federspeicher-Lösekammern noch immer druckbeaufschlagt bleiben, so beginnen sich bei den gelösten Feststellbremsen auch die Betriebsbremsen zu lösen und das Anhängefahrzeug kann sich in Bewegung setzen, wenn es z. B. an einer Stelle mit leicht geneigter Fahrbahn abgestellt ist.

Bei nur leichter Fahrbahnneigung kann es vorkommen, daß der Bediener es übersieht, das Parkventil durch Ziehen des roten Betätigungsknopfes in die Parkstellung zu versetzen, zu dem der Anhänger über die automatische Bremsung zunächst fest eingebremst bleibt. Das Vergessen, beim abgestellten Anhängefahrzeug das Parkventil zu betätigen, stellt also bei dem Betrieb bekannter Anhängerbremsventile mit einem Doppel-Löseventil eine Sicherheitslücke dar.

Bei einem Anhänger mit elektronischer Bremsregelung wird die Regelung des Bremsdruckes in den Bremszylindern einer Fahrzeugachse von der hierfür vorgesehenen Bremsregelelektronik vorgenommen, welche auch z. B. im Falle eines ABS-Regeleingriffes mit unterschiedlichen Reibverhältnissen auf beiden Fahrzeugseiten den Bremsdruck in den Bremszylindern auf der linken Fahrzeugseite unterschiedlich zu dem Bremsdruck in den Bremszylindern auf der rechten Fahrzeugseite aussteuert. Ebenso wird der Bremsdruck von der Bremsregelelektronik z. B. abhängig von der Beladung variiert. Für eine derartige lastabhängige Bremsung wird die Beladung z. B. über eine Druckmessung in einem Luftfederbalg ermittelt und der Bremsregelelektronik mitgeteilt, welche dann den Bremsdruck in den Bremszylindern des Anhängers entsprechend modifiziert. Für die Erzeugung des Bremsdruckes ist ein Bremsdruckmodulator vorgesehen, welcher aus elektrisch ansteuerbaren Ventilen besteht, die üblicherweise in taktender Betriebsweise von der Bremsregelelektronik angesteuert werden und als Pilotventile zur Erzeugung eines Steuerdrucks in der Steuerkammer eines Relaisventiles dienen, welches den Steuerdruck luftmengenverstärkt als Bremsdruck über seinen Ausgang an einen oder mehrere Bremszylinder abgibt; hierbei können ein oder mehrere derartig aufgebaute Bremsregelkanäle implementiert sein.

Ein Anhängerbremsventil für den Einsatz in einem Anhänger mit elektronischer Bremsregelung braucht daher weder über die Funktion der Luftmengenverstärkung noch über Sonderfunktionen wie z. B. die erwähnte Funktion einer Voreilung oder diejenige einer lastabhängigen Modifizierung des Bremsdruckes zu verfügen. Für ein solches Anhängerbremsventil ist es völlig ausreichend, wenn die Grundfunktionen, nämlich die Bereitstellung des vom Zugfahrzeug übertragenen Bremsvorgabedruckes, die Abrißsicherung sowie die Möglichkeit des Anschlusses eines vorstehend erläuterten Doppel-Löseventiles realisiert sind.

Der Erfindung liegt deshalb die Aufgabe zugrunde, für ein Anhängerbremsventil nach der erstgenannten bekannten Schrift eine Ventilkonstruktion anzugeben, die entsprechend den reduzierten Anforderungen des Einsatzes des Anhängerbremsventiles in einem Anhänger mit elektronischer Bremsregelung zur Verringerung der Herstellkosten vereinfacht ist, und bei der bei geparktem Anhängefahrzeug eine erhöhte Sicherheit gegen ein unbeabsichtigtes Anrollen gegeben ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß für die erhöhte Sicherheit gegen ein unbeabsichtigtes Anrollen auf Seiten des Anhängers keinerlei zusätzliche Komponenten oder Verrohrungen erforderlich sind.

Zusätzlich hat die Erfindung den Vorteil, daß die Fehleranfälligkeit durch den im Vergleich zum Stand der Technik wesentlich vereinfachten Aufbau erheblich reduziert ist.

Relaisventile sind durch die Entlüftung der Relaisventil-Druckkammer nicht frei von Luftverbrauch. Mit dem Entfallen einer luftmengenverstärkenden nach dem Relaisventil-Prinzip arbeitenden Ventileinrichtung nach der Erfindung entsteht der Vorteil, daß kein Luftverbrauch mehr erfolgt und die mit einem Luftverbrauch verbundene Geräuschentwicklung ebenfalls nicht stattfindet.

Durch das Entfallen eines Relaisventiles entfällt die Relaiskolben-Hysterese, was erstens zu dem Vorteil einer verbesserten Genauigkeit und zweitens zu dem vorteil führt, daß kein verzögertes Ansprechen des ausgesteuerten Druckes gegenüber dem eingesteuerten Druck mehr vorhanden ist. Der Ansprechdruck mußte also beim St. d. T. zunächst von dem pneumatischen Bremssignal überschritten werden, damit das pneumatische Bremssignal luftmengenverstärkt durchgesteuert werden kann.

Mit dem Wegfall einer Voreilung ist der Vorteil einer verbesserten Genauigkeit verbunden; außerdem entfällt durch den Wegfall der Voreilungsfunktion das fehlerträchtige und möglicherweise sogar mißbräuchliche Einstellen der Voreilung.

Eine Weiterbildung der Erfindung hat den Vorteil, daß durch den Wegfall des Relaisventiles mit seiner Zeitverzögerung "Ausgang-Eingang" von i. Allg. mehr als 30 ms ein Zeitvorteil für das elektrische Signal des Drucksensors verbunden ist, weil dieser Drucksensor den vom Anhängerbremsventil ausgegebenen Bremsdruck mißt.

Stark verallgemeinert ist bei der Erfindung der pneumatische Pfad optimiert, weil dieser im Gegensatz zu der im Normalfall wirksamen elektrischen Bremssignal-Übertragung nur für die Notbremsung vorgesehen ist, bei der auf eine lastabhängige Bremsdruckbeeinflussung verzichtet werden kann. Mit dem optimierten pneumatischen Pfad entsteht der Vorteil, daß zum einen luftverbrauchende Einrichtungen entfallen und zum anderen Zeitverzögerungen durch derartige Einrichtungen auch nicht mehr auftreten.

Eine andere Weiterbildung der Erfindung hat den Vorteil, daß die Umschaltung des Anhängerbremsventils in die Abrißstellung nur vom am Versorgungsanschluß des Ventils [dieser ist pneumatisch mit dem roten Kupplungskopf verbunden] anliegenden Druck abhängt. Der Übergang von einer in die andere Schaltstellung erfolgt zudem schlagartig, so daß das Schalten auch reibungsunabhängig erfolgt und schleichende Übergänge vermieden werden. Somit erfolgt beim Versorgungsleitungs-Abriß die Zwangsbremsung "sofort", und es muß gegenüber konventionellen Lösungen zunächst keine Kennlinie durchfahren werden. Das Ventil ist als druckausgeglichenes Ventil mit positiver Überdeckung ausgeführt; gegenüber konventionellen Lösungen hat diese Weiterbildung auch den Vorteil, daß atmende Räume und die damit verbundenen Vereisungsgefahren vermieden werden.

Von der letztgenannten Weiterbildung gibt es verschiedene Ausführungsformen, die entsprechend dem jeweils bevorzugten Lösungsweg bestimmte Vorteile bieten.

Die Erfindung wird im folgenden anhand eines Ausführungsbeispiels, das in den Zeichnungen dargestellt ist, näher erläutert.

Es zeigt:
- Fig. 1: Das Anhängerbremsventil in dem Blockschaltbild einer Anhänger-EBS-Bremsanlage;
- Fig. 2: das als Schieberventil ausgeführte Anhängerbremsventil bei gekoppeltem VorratsDruckschlauch;
- Fig. 3: das als Schieberventil ausgeführte Anhängerbremsventil bei entkoppeltem VorratsDruckschlauch.
- Fig. 4: ein als Schieberventil mit einem integrierten Vorsteuerventil ausgebildetes Anhängerbremsventil, bei dem die Ventilbetätigung unabhängig von dem Behälterdruck erfolgt, in der Grundstellung;
- Fig. 5: das Anhängerbremsventil nach Fig. 4 in der Abrißstellung;
- Fig. 6: eine Detaildarstellung des Vorsteuerventils in der Grund- (Fig. 6a) und Abrißstellung (Fig. 6b) ;
- Fig. 7: ein Anhängerbremsventil nach dem Prinzip von Fig. 4, bei dem das Vorsteuerventil als separates 3/2-Wegeventil ausgebildet ist, in der Grundstellung;
- Fig. 8: das Anhängerbremsventil nach Fig. 7 in der Abrißstellung;
- Fig. 9: ein Anhängerbremsventil nach dem Prinzip von Fig. 6, bei dem das Vorsteuerventil als eine Kombination von zwei 2/2-Wegeventilen ausgebildet ist, in der Grundstellung;
- Fig. 10: das Anhängerbremsventil nach Fig. 9 in der Abrißstellung.

Anhand von Fig. 1 soll der Funktionsumfang des Anhängerbremsventils für eine Anhänger-EBS-Bremsanlage erläutert werden; hierbei wird anhand der Realisierung erläutert, auf welche Weise bereits eingangs erwähnte Funktionen, die entfallen können, von der Anhänger-EBS-Bremsdruckregelung übernommen werden.

Dem Blockschaltbild nach Fig. 1 ist die Konfiguration einer Basisvariante für Anhänger-EBS-Systeme zugrundegelegt, welche aus einem Sattelauflieger (34) mit zwei Achsen besteht, es handelt sich hier um ein 2S/2M-System [zwei ABS-Sensoren für zwei Räder und zwei Modulatorkanäle für die Radbremsen der linken bzw. der rechten Seite]; die ABS-Bremsdruckregelung wird also seitenweise durchgeführt.

Der Anhänger mit dem erfindungsgemäßen Anhängerbremsventil ist mit dem Zugfahrzeug pneumatisch über zwei Druckschläuche, über erstens einen Vorrats-Druckschlauch (30) zur Übertragung des Versorgungsdruckes [am Zugfahrzeug befestigter roter Druckschlauch, der über den "roten Kupplungskopf" (48) des Anhängers angekuppelt ist] und über zweitens einen Brems-Druckschlauch (31) zur Übertragung des Bremsdruckes [am Zugfahrzeug befestigte gelbe Leitung, die über den "gelben Kupplungskopf" (49) des Anhängers angekuppelt ist] verbunden. Auf der Seite des Zugfahrzeuges ist sowohl der rote Druckschlauch als auch der gelbe Druckschlauch pneumatisch an ein Anhängersteuerventil [AST-Ventil] angeschlossen.

Anhängerseitig ist der Vorrats-Druckschlauch (30) pneumatisch über das vorstehend erläuterte Betriebsbrems-Löseventil (33) mit dem Versorgungsanschluß (1), und der Brems-Druckschlauch (31) über eine Pneumatikleitung mit dem Bremsvorgabeanschluß (4) des Anhängerbremsventiles (8) verbunden. Das Anhängerbremsventil (8) verfügt weiter über einen Behälteranschluß (3), an dem der Vorrats-Druckbehälter (9) für den Anhänger angeschlossen ist, und über einen Bremsdruckanschluß (2), an dem der pneumatische Bremsdruck an den pneumatischen Eingang (28) des pneumatischen Bremsdruckmodulators (29) ausgegeben wird; dieser Bremsdruck stellt für den Anhänger mit seiner elektronischen Bremsdruckregelung den Redundanzdruck dar.

Bei dem Anhänger mit der elektronischen Bremsdruckregelung wird in allen denkbaren Fällen, in denen eine Bremsung stattfinden soll, am Bremsdruckanschluß (2) ein entsprechender Redundanzdruck ausgesteuert. Bei normalen Bremsvorgängen gilt dies, da der Anhänger natürlich mit jeder Art von entsprechend zugelassenen Zugfahrzeugen zu koppeln sein muß, sowohl für den Fall, daß das Zugfahrzeug über eine elektronische Bremsregelung verfügt, als auch für den Fall, daß das Zugfahrzeug mit einer konventionellen pneumatischen Bremsanlage ausgerüstet ist. Bei einem Zugfahrzeug mit elektronischer Bremsregelung wird ein Bremsvorgang durch Betätigung des zum Regelsystem gehörenden Bremswertgebers eingeleitet, während dies bei einem konventionellen Zugfahrzeug durch Betätigung des entsprechenden Motorwagen-Bremsventils erfolgt.

Beim Motorwagen [dieser stellt das Zugfahrzeug dar] mit elektronischer Bremsregelung, bei dem im Normalfall natürlich der von der elektronischen Anhänger-Bremsregelung eingestellte Bremsdruck durch das vom Motorwagen über die elektrische Schnittstelle (32) [ISO 7638/CAN] zum Anhänger übertragene elektrische BremsanforderungsSignal bestimmt ist, wird der Redundanzdruck im Anhänger im Fehlerfall zum Bremsen herangezogen, wenn nämlich die Motorwagen-Elektronik ausgefallen ist. Bei Verwendung eines konventionell gebremsten Motorwagens dient der "Redundanzdruck" im Anhänger zur Bremsung des Anhängers überhaupt, da ein derartiger Motorwagen die elektronische Bremsdruckregelung im Anhänger nicht ansprechen kann. Die Umsetzung des pneumatischen Bremssignals in ein elektronisches Signal erfolgt durch den Drucksensor (47) im Anhänger.

Außer diesen normalen Bremsvorgängen wird auch vom Anhängerbremsventil (8) ein Vollbremsdruck zum Modulator (29) durchgesteuert, der eine rein pneumatische Bremsung ohne Zutun der Elektronik erlaubt. Bei Abriß einer der beiden Pneumatikleitungen zwischen Zugfahrzeug und Anhänger oder bei nicht gekuppeltem rotem Kupplungskopf wird in bekannter Weise durch das Zusammenwirken zwischen Anhängersteuerventil im Zugfahrzeug und Anhängerbremsventil eine Zwangsbremsung mittels des Behälterdruckes ausgelöst, indem, wie unten erläutert, in diesem Fall im Anhängerbremsventil (8) der Behälteranschluß (3) pneumatisch mit dem Bremsdruckanschluß (2) verbunden wird.

Zusammenfassend kann gesagt werden, daß in allen Fällen, in denen eine Bremsung des Anhängers erforderlich ist, sei dies eine normale Bremsung oder eine Zwangsbremsung, vom Anhängerbremsventil (8) am Bremsdruckanschluß (2) ein Druck, entweder der Redundanzdruck oder der Behälterdruck, ausgegeben wird, welcher dem pneumatischen Bremsdruckmodulator (29) zugeführt wird.

Der Bremsdruckmodulator (29) verfügt weiter über einen Druckversorgungsanschluß (35), der durch eine Pneumatikleitung mit dem Vorrats-Druckbehälter (9) verbunden ist. Der Bremsdruckmodulator (29) wird über elektrische Verbindungen durch die Elektronikeinheit (42) gesteuert.

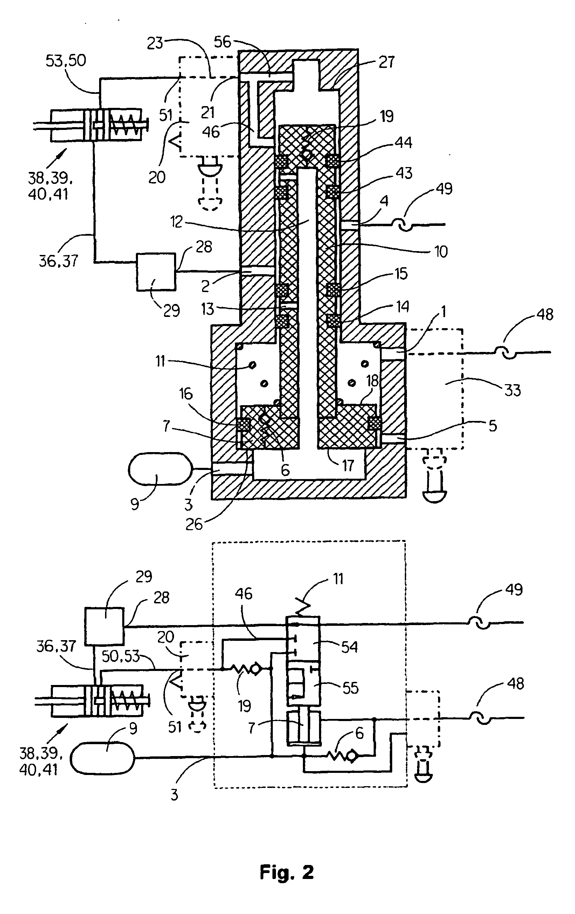

Der pneumatische Bremsdruckmodulator (29) ist z. B. als zwei-kanaliges Druckregelmodul nach der DE 42 27 084 A1 [dort Fig. 2] aufgebaut; diese Schrift wird im folgenden mit S1 bezeichnet.

Bei einer Realisierung nach der S1 ist für beide Kanäle ein gemeinsames 3/2-Magnetventil [dort (12)] als Umschaltventil für weitere kanalspezifische Belüftungs- und Entlüftungs-Magnetventile [dort (9') und (7) bzw.(9) und (8)] vorgesehen, welche für den Fall der EBS-Bremsdruckregelung mit einer taktenden Betriebsweise Pilot-Bremsdrücke je Kanal aussteuern, die wiederum an Steuereingänge [dort (5) bzw. (6)] von pro Kanal vorgesehenen Relaisventilen [dort (3) bzw. (4)] angelegt sind. Die Relaisventil-Arbeitsanschlüsse [dort (20) und (22) bzw. (21) und (23)] sind, wie in Fig. 1 gezeigt, mit den Zylinder-Betriebsbremsleitungen (36) für die in Fahrtrichtung auf der linken Fahrzeugseite angeordneten Federspeicherbremszylinder (38) und (39), bzw. mit den Zylinder-Betriebsbremsleitungen (37) für die in Fahrtrichtung auf der rechten Fahrzeugseite angeordneten Federspeicherbremszylinder (40) und (41) verbunden.

Der pneumatische Eingang (28) ist mit dem Steuerdruck-Anschluß [dort (13)] und der Druckversorgungsanschluß (35) ist mit dem Vorratsdruck-Anschluß [dort (17)] des Druckregelmoduls nach der S1 verbunden. In seiner federbetätigten Grundstellung, d. h. in seinem stromlosen Zustand, wird von dem 3/2-Magnetventil [dort (12)] der S1 der am pneumatischen Eingang (28) nach Fig. 1 ankommende Druck zu den Steuereingängen der Relaisventile [dort (3), (4)] der S1 durchgesteuert und luftmengenverstärkt an den genannten Relaisventil-Arbeitsanschlüssen ausgegeben. Diese Betriebsweise entspricht dem Redundanzfall, bei dem ein pneumatischer Redundanzdruck luftmengenverstärkt zu dem Bremszylinder geführt wird, ohne daß die Elektronikeinheit (42) in irgendwelcher Weise daran beteiligt ist.

Im strombeaufschlagten Zustand, d. h. gesteuert durch die Elektronikeinheit (42) nach Fig. 1, wird von dem 3/2-Magnetventil [dort (12)] der S1 der am Druckversorgungsanschluß (35) nach Fig. 1 anliegende Versorgungsdruck mit den oben erläuterten kanalspezifischen Belüftungs- und Entlüftungsmagnetventilen der S1 verbunden, welches den erläuterten Fall der elektronischen EBS-Bremsdruckregelung darstellt. Im Rahmen der EBS-Bremsdruckregelung werden außerdem Druckregelfunktionen ausgeführt, die bei konventionellen Bremsanlagen z. T. als Funktion eines Anhängerbremsventiles ausgeführt sind.

Auf diese Weise wird im Rahmen der EBS-Bremsdruckregelung auch eine ladungsabhängige Bremskraftverteilung zwischen den Fahrzeugachsen vorgenommen. Hierzu ist - es wird von einem luftgefederten Auflieger mit Luftfederbälgen auf der linken und rechten Fahrzeugseite ausgegangen - der Luftfederbalg auf der rechten Seite üblicherweise mit einem Drucksensor versehen, dessen Druckmeßwert der Elektronikeinheit (42) zur Verfügung steht. Die Elektronikeinheit (42) modifiziert die ausgesteuerten Bremsdrücke beladungsabhängig unter Verwendung dieses die Beladung des Fahrzeugs repräsentierenden Druckmeßwertes.

Die Elektronikeinheit (42) verwendet für die EBS-Bremsdruckregelung auch den Druckmeßwert des Drucksensors (47), der den am Bremsdruckanschluß (2) ausgegebenen Bremsdruck des Anhängerbremsventiles (8) darstellt. Dieser Druckmeßwert ist für den Fall eines konventionellen Zugfahrzeuges vorgesehen, bei dem die Elektronikeinheit (42) den elektrischen Druckmeßwert als elektrisches Bremsanforderungssignal für die EBS-Bremsdruckregelung benutzt.

Der Vollständigkeit halber sei ergänzt, daß die ABS-Bremsregelung auch durch die Einrichtungen der EBS-Bremsdruckregelung durchgeführt wird; hierzu sind an den linken und rechten Rädern, die durch die Federspeicherbremszylinder [(38) und (39) bzw. (40) und (41)] gebremst werden, entsprechende ABS-Sensoren zur Erfassung der jeweiligen Radgeschwindigkeiten vorgesehen.

Faßt man alle Funktionen der EBS-Bremsdruckregelung zusammen, so müssen für das Anhängerbremsventil (8) nur noch pneumatische Funktionen realisiert sein, die durch zwei Schaltzustände definiert sind: Zum einen ist dies die Ventil-Grundstellung, die vorliegt, wenn der Versorgungsanschluß mit Druck beaufschlagt ist, und zum anderen ist dies die Ventil-Abrißstellung, welche bei drucklosem Versorgungsanschluß (1) gegeben ist.

In der Ventil-Grundstellung sind durch das Anhängersteuerventil (8) folgende Verbindungen hergestellt:
G1) - Der Versorgungsanschluß (1) ist pneumatisch über das zweite Rückschlagventil (6) mit dem Behälteranschluß (3) verbunden;
G2) - der Bremsdruckanschluß (2) ist pneumatisch mit dem Bremsvorgabeanschluß (4) verbunden.

In seiner Ventil-Abrißstellung sind durch das Anhängerbremsventil (8) folgende Verbindungen hergestellt:
A1) - Der Versorgungsanschluß (1) ist durch das zweite Rückschlagventil (6) pneumatisch abgeschlosssen;
A2) - der Bremsdruckanschluß (2) ist pneumatisch mit dem Behälteranschluß (3) verbunden.

Neben diesen Funktionen für die EBS-Bremsdruckregelung enthält das Anhängerbremsventil Anschlußmöglichkeiten für die Funktionsbaugruppen des Doppel-Löseventils, d. h. den Anschluß des Betriebsbrems-Löseventils (33) und des Parkventils (20).

In Fig. 1 ist das Anhängerbremsventil (8) in seiner Ventil-Grundstellung gezeigt, was daran erkennbar ist, daß der rote Kupplungskopf (48) in gekuppeltem Zustand gezeichnet ist.

Für den Anschluß des Betriebsbrems-Löseventils (33) ist der vorstehend bereits erwähnte Löseanschluß (5) vorgesehen, welcher durch eine im Anhängersteuerventil (8) bestehende direkte pneumatische Verbindung mit dem Behälteranschluß (3) verbunden ist.

Wenn nun das in Fig. 1 in seiner Fahrstellung [Betätigungsknopf "gezogen"] gezeichnete Betriebsbrems-Löseventil in seine Lösestellung versetzt wird, so wird zur Lösung der Betriebsbremsen, wie bereits vorstehend erläutert, der Behälterdruck über den Druckkanal (24) in den Versorgungsanschluß (1) eingespeist.

Der Anschluß des Parkventils (20) an das Anhängerbremsventil (8) erfolgt nicht wie bei dem St. d. T. über den Vorratsbehälter, sondern über einen separaten Parkanschluß (21); innerhalb des Anhängerbremsventils (8) ist der Parkanschluß (21) über das bereits vorstehend erwähnte, in Richtung des Parkanschlusses (21) öffnende, erste Rückschlagventil (19) mit dem Behälteranschluß (3) verbunden [dieses Rückschlagventil ist, wie vorstehend erläutert, beim St.d.T. im Parkventil des Doppel-Löseventils untergebracht].

Bei dem in Fig. 1 in seiner Fahrstellung [Betätigungsknopf "nicht gezogen"] gezeigten Parkventil (20) wird der am Parkausgang (21) anliegende Behälterdruck über den Druckkanal (23) durch den Parkventil-Anschluß (51) in die Löseleitung (53) übertragen und von dort über das Bremsüberlast-Wechselventil (52) und die Federspeicher-Löseleitungen (50) in die Lösekammern für die Federspeicherbremszylinder (38, 39, 40, 41) eingespeist; damit sind die Feststellbremsen dieser Federspeicherbremszylinder gelöst.

In der Parkstellung des Parkventils (20) [Betätigungsknopf "gezogen"] werden die Lösekammern der Federspeicherbremszylinder über den in dieser Ventilstellung wirksamen Druckkanal (22) entlüftet, was dazu führt, daß die Feststellbremsen der Federspeicherbremszylinder wieder wirksam werden.

Erfindungsgemäß ist im Anhängerbremsventil (8) am Parkanschluß (21) parallel zum ersten Rückschlagventil (19) ein Bypasskanal (46) vorgesehen, welcher in der Ventil-Grundstellung des Anhängerbremsventiles (8) ohne Bedeutung ist, da er über die in diesem Schaltzustand wirksamen Wege (54) abgeschlossen ist.

In der Ventil-Abrißstellung werden jedoch die Wege der Ventil-Abrißstellung (55) wirksam und in dieser Stellung liegt der Behälterdruck über den Bypasskanal (46) direkt am Parkanschluß (21) an; in dieser Ventilstellung liegt der Behälterdruck außerdem auch am Bremsdruckanschluß (2) an.

In der Ventil-Abrißstellung - das Parkventil (20) befindet sich in seiner in Fig. 1 gezeigten Fahrstellung - werden also sowohl die Betriebsbremskammern als auch die Lösekammern der Federspeicherbremszylinder (38, 39, 40, 41) mit dem Behälterdruck beaufschlagt; die Feststellbremsen sind gelöst und die Betriebsbremsen sind wirksam.

Im Rahmen eines leckagebedingten Druckabbaus im Vorratsbehälter (9) nimmt die Wirkung der Betriebsbremsen ab; gleichzeitig nimmt aber auch das Lösen der Feststellbremse ab, so daß die Wirkung der Feststellbremse zunimmt. Im Verlauf des Druckabbaus überwiegt bei einem durch die Geräteauslegung [Federkraft/Druckfläche] vorgegebenen Druckniveau je nach Auslegung die Wirkung der Betriebs- oder die Wirkung der Feststellbremsen: Damit ist bei jedem Druckniveau eine Restbremswirkung für den Anhänger vorhanden, die entweder von den Betriebs- oder von den Feststellbremsen kommt.

Unter Verwendung der erfindungsgemäßen Einrichtung wird ein Anhänger, der an einer Fahrbahn mit nur mäßiger Fahrbahnneigung aufgestellt ist, nicht selbständig anrollen; die Sicherheit gegenüber einem automatischen Wegrollen des Anhängers ist damit entscheidend verbessert.

Bei einem abgestellten Anhänger ist ein sicherer Zustand erreicht, wenn das Parkventil durch Ziehen des Betätigungsknopfes in die Parkstellung versetzt worden ist und damit die Feststellbremsen dauerhaft wirksam sind. Leider wird manchmal vergessen, den Betätigungsknopf zu ziehen, da das abgestellte Fahrzeug durch die automatische Zwangsbremsung ja zunächst als sicher abgebremst erscheint. Die Erfindung erhöht die Sicherheit vor allem dadurch, daß auch bei der Fehlbedienung, das Parkventil nicht in den Parkzustand zu versetzen, der Anhänger stets ausreichend abgebremst bleibt und damit praktisch nicht wegrollen kann.

Für verringerte Anforderungen oder andersartige Anlagen [z. B. ohne Federspeicherbremszylinder] kann gegebenenfalls auch auf die Verwendung der erläuterten Löse- bzw. Parkventilfunktion verzichtet werden. Bei einer derartigen Ausführung sind der rote Kupplungskopf (48) direkt an den Versorgungsanschluß (1) und die Löseleitung (53) direkt an den Parkanschluß (21) angeschlossen. Durch das Fehlen des Parkventils kann das abgestellte Fahrzeug dann nicht mehr über die Feststellbremsen gesichert werden, und das Lösen der automatischen Zwangsbremsung erfolgt mit dem erneuten Anschluß des Versorgungsleitungs-Druckschlauches an das Zugfahrzeug. Es ist jedoch wichtig, daß selbst in einer derart vereinfachten Anlage die erläuterten Maßnahmen gegen ein automatisches Wegrollen wirksam sind. Ergänzt sei, daß es natürlich auch die Möglichkeit gibt, ein Betriebsbrems-Löseventil oder ein Parkventil als einzelnes Ventil einzusetzen.

Es besteht auch die Möglichkeit, das erfindungsgemäße Anhängerbremsventil mit einem Betriebsbrems-Löseventil und/oder einem Parkventil in einem Gehäuse baulich zu vereinigen.

Es sei noch ergänzt, daß das Bremsüberlast-Wechselventil (52) dazu dient, die Bremsen davor zu schützen, daß eine zu große Zuspannkraft auf sie einwirkt, wenn die Feststell- und die Betriebsbremse gleichzeitig wirksam werden.

Sollte die Feststellbremse wirksam sein, indem in der Löseleitung (53) Druck anliegt, und gleichzeitig an den Zylinder-Betriebsbremsleitungen (37) ein Betriebsbremsdruck anliegen, so reduziert dieser Betriebsbremsdruck über das Überlast-Wechselventil (52) den Lösedruck in den Federspeicher-Löseleitungen (50) derart, daß die von den Feststellbremsen ausgeübte Bremskraft um die Kraft der Betriebsbremsen reduziert wird.

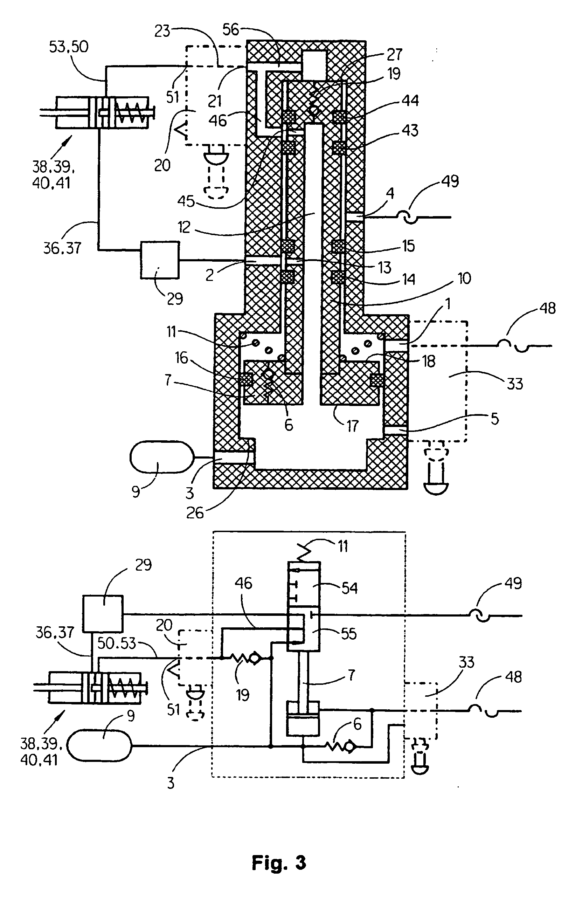

In Fig. 2 und Fig. 3 sind das Betriebsbrems-Löseventil (33) und das Parkventil (20) nur schematisch in ihrer jeweiligen Fahrstellung dargestellt, die pneumatischen Durchschaltungen "Eingang/Ausgang" sind jeweils als gestrichelte Linien gezeichnet.

Im jeweils unteren Bereich der Darstellungen von Fig. 2 und Fig. 3 sind die Schaltzustände des Ventils als Pneumatikschaltbilder eines kolbenbetätigten 3/2-Wegeventils dargestellt; der jeweils obere Bereich zeigt diese Schaltzustände in der Realisierung des Anhängerbremsventils (8) als Schieberventil.

Das Anhängerbremsventil (8) ist in Fig. 2 in der Ventil-Grundstellung und in Fig. 3 in der Ventil-Abrißstellung gezeigt.

Bei Fig. 2 ist zur Kennzeichnung der Ventil-Grundstellung der rote Kupplungskopf (48) in gekuppeltem Zustand gezeichnet. Im Pneumatikschaltbild befindet sich entsprechend der Ventil-Grundstellung der Kolben (7), der als Betätigungskolben für das Ventil ausgebildet ist, in seinem unbetätigten Zustand und es sind die für diesen Zustand gültigen Wege (54) wirksam, so daß im Anhängerbremsventil (8) die vorstehend erläuterten Verbindungen G2) und G1) [im Fall, daß am Anschluß (1) der Versorgungsdruck anliegt, wird das unten erläuterte zweite Rückschlagventil (6) in Durchlaßrichtung betrieben] hergestellt sind.

Bei Fig. 3 ist zur Deutlichmachung des Zustandes "Abriß" der rote Kupplungskopf (48) in nicht gekuppeltem Zustand gezeichnet [der gelbe Kupplungskopf (49) ist sowohl in Fig. 2 als auch in Fig. 3 in gekuppeltem Zustand gezeichnet]. Im Pneumatikschaltbild befindet sich der Betätigungskolben (7) in seinem betätigten Zustand und es sind die für diesen Zustand gültigen Wege (55) wirksam, so daß im Anhängerbremsventil (8) die oben erläuterten Verbindungen (A1) [das zweite Rückschlagventil (6) befindet sich bei offenem Versorgungsanschluß (1) im Sperrzustand] und (A2) hergestellt sind.

Bei der konstruktiven Ausgestaltung des Anhängerbremsventils (8) als Schieberventil entsprechend den jeweils oberen Bereichen von Fig. 2 bzw. Fig. 3 ist der mit einer O-Ring-Dichtung (16) versehene Betätigungskolben (7) mit dem Ventilschieber (10) fest und druckdicht verbunden.

In der Mitte der Betätigungskolben-Ventilschieber-Anordnung (7, 10) befindet sich ein Druckkanal (12) in Form eines Sackloches.

Der Betätigungskolben (7) weist eine erste (17) und eine zweite (18) Wirkfläche auf. Die erste Wirkfläche (17) ist durch die Querschnittsfläche des Betätigungskolbens (7) gebildet und die zweite Wirkfläche (18) ist aufgrund der baulichen Vereinigung von Betätigungskolben (7) und Ventilschieber (10) als Ringfläche ausgestaltet, wobei der innere Ringdurchmesser durch den Au-ßendurchmesser der Ventilschieberdichtung (14) festgelegt ist.

Die erste Wirkfläche (17) ist größer ausgebildet als die zweite Ring-Wirkfläche (18).

Das zweite Rückschlagventil (6) ist in der gezeigten Wirkrichtung im Betätigungskolben (7) eingebaut, wobei beide Wirkflächen (18) und (17) durch dieses Rückschlagventil derart miteinander verbunden sind, daß die Durchlaßrichtung des Rückschlagventils (6) von der zweiten (18) zur ersten (17) Wirkfläche verläuft. Da die zweite Wirkfläche (18) vom am Versorgungsanschluß (1) anliegenden Druck und die erste Wirkfläche (17) von dem am Behälteranschluß (3) anliegenden Druck beaufschlagt wird, ist das zweite Rückschlagventil (6) immer dann in Durchlaßrichtung geschaltet, wenn der am Versorgungsanschluß (1) anliegende Druck größer ist als der am Behälteranschluß (3) anliegende Druck.

In der Grundstellung nach Fig. 2 liegt die Betätigungskolben-Ventilschieber-Anordnung (7, 10) durch die Wirkung der Rückstellfeder (11) am ersten Anschlag (26) des Ventilgehäuses auf. Bei dieser Schaltstellung sind die oben erläuterten Verbindungen G1) und G2) hergestellt. Hierbei stellt G2 eine direkte Verbindung dar, d. h. in den pneumatischen Pfad sind keinerlei mechanische Zwischenglieder eingefügt [der Verbindung G2 entspricht bei der DE 28 10 850 A1, daß der am dortigen Steueranschluß (7) anliegende Druck zunächst auf den dortigen Relaiskolben (6) als mechanisches Zwischenglied einwirkt].

Der vorstehend erläuterte Bypasskanal (46) ist als Druckkanal innerhalb des Ventilgehäuses realisiert und ist in der Ventil-Grundstellung ohne Wirkung, da der Parkanschluß (21) sowohl über den Direktkanal (56) als auch über den Bypasskanal (46) an den gleichen Druckraum angeschlossen ist, welcher über das in Richtung des Parkanschlusses (21) öffnende, in der Stirnwand des Ventilschiebers (10) angeordnete, erste Rückschlagventil (19) und den Sackloch-Druckkanal (12) mit dem Behälteranschluß (3) verbunden ist.

In der Abrißstellung nach Fig. 3 wirkt der am Behälteranschluß (3) anliegende Druck über die erste Wirkfläche (17) auf den Betätigungskolben (7) ein, wodurch die Ventilkolben-Ventilschieber-Anordnung (7, 10) an den zweiten Anschlag (27) geschoben wird.

Das zweite Rückschlagventil (6) befindet sich in Sperrichtung, was die oben erläuterte Verbindung A1) bewirkt. Im Ventilschieber (10) ist ein Druckkanal (13) in Form einer Bohrung vorgesehen. Die oben erläuterte Verbindung A2) ist durch die direkte pneumatische Verbindung vom Behälteranschluß (3) über den Sackloch-Druckkanal (12) und den Druckkanal (13) zum Bremsdruckanschluß (2) hergestellt.

In der Ventil-Abrißstellung ist der Parkanschluß (21) über zwei zueinander parallel geschaltete pneumatische Verbindungen mit dem Behälteranschluß (3) verbunden: Die erste Verbindung führt über den Direktkanal (56), das erste Rückschlagventil (19) und den Sackloch-Druckkanal (12) zum Behälteranschluß (3) und der zweite pneumatische Weg führt direkt unter Umgehung des Rückschlagventils über den Bypasskanal (46), den als Bohrung ausgeführten Druckkanal (45) und den Sackloch-Druckkanal (12) zum Behälteranschluß (3); bei drucklosem Versorgungsanschluß (1) wird also die Wirkung des ersten Rückschlagventils (19) aufgehoben.

Neben seiner Anordnung innerhalb des Betätigungskolbens (7) kann das zweite Rückschlagventil (6) auch ausgeführt werden, indem die als O-Ring (16) gezeigte Dichtung als Nutring in geeigneter Einbaurichtung ausgebildet ist oder indem an einer anderen Stelle ein Rückschlagventil vorgesehen ist, welches die beiden Druckräume verbindet, die eine Kraft auf die Wirkflächen (17) und (18) ausüben.

Das Gleiche gilt sinngemäß auch für das erste Rückschlagventil (19) und den O-Ring (44).

Zur Abdichtung des Ventilschiebers gegenüber dem Versorgungsanschluß (1) ist am Ventilschieber (10) eine geeignete Schieberventildichtung (14) als erste Schieber-Dichtung und zur Abdichtung gegenüber dem Bremsdruckanschluß (2) [diese Dichtung ist für den Fall der Ventil-Grundstellung wichtig] ist am Ventilschieber (10) eine Schieberventildichtung (15) als zweite Schieber-Dichtung vorgesehen. Zur Dichtung des Bohrungs-Druckkanals (45), sowohl gegenüber dem Druckraum für den Direktanschluß (56) als auch gegenüber dem Bremsdruckanschluß (4), sind eine dritte (43) und vierte (44) Schieberventildichtung vorgesehen. Verallgemeinert, dienen diese Schieberdichtungen zur Abdichtung der in den verschiedenen Ventil-Schaltstellungen wirksamen pneumatischen Druckräume für die pneumatischen Wege im Ventil.

Zur Fertigungsvereinfachung kann der Betätigungskolben (7) auch einstückig mit dem Ventilschieber (10) verbunden sein, so daß die Betätigungskolben-Ventilschieber-Einheit (7, 10) z. B. komplett als Drehteil oder als Kunststoffspritzteil herstellbar ist.

Alternativ zur gezeigten Ausführungsform, bei der die Schieberventildichtungen (14, 15, 43, 44) im Ventilschieber (10) und die Dichtflächen an der Innenwand des Ventilgehäuses angeordnet sind, besteht auch die Möglichkeit, wie dies aus der Ventiltechnik bekannt ist, die Schieberventildichtungen (14, 15, 43, 44) im Ventilgehäuse, und zwar oberhalb und unterhalb der Bohrung für den Bremsdruckanschluß (2) bzw. der Einlaßöffnung für den Bypasskanal (46) anzuordnen, und die Dichtflächen am Ventilschieber (10) auszubilden.

Wie vorstehend erläutert, ist in der Abrißstellung des Anhängerbremsventils (8) nach Fig. 3 die automatische Zwangsbremsung wirksam und der Anhänger läßt sich nicht bewegen, solange im Vorratsdruck-Behälter (9) noch ein hinreichender Druck vorhanden ist; zum Lösen der Zwangsbremsung wird, wie erläutert, das Betriebsbrems-Löseventil (33) nach Fig. 1 in seine Lösestellung [Betätigungsknopf "nicht gezogen"] versetzt.

Bei diesem Lösen wirkt nun der im Vorratsdruck-Behälter herrschende Druck auf beide Wirkflächen (17) und (18) nach Fig. 3 ein. Die Rückstellfeder (11) ist derart dimensioniert, daß sie die Kraft durch den Flächenanteil, um welchen die zweite Wirkfläche (18) gegenüber der ersten Wirkfläche (17) reduziert ist, aufhebt und derart überkompensiert, daß die Betätigungskolben-Ventilschieber-Anordnung (7, 10) von der Rückstellfeder (11) an den ersten Anschlag (26) geschoben wird. Dadurch ist die in Fig. 2 gezeigte Ventilstellung eingenommen und der Bremsdruckanschluß (2) ist mit dem Bremsvorgabeanschluß (4) verbunden. Da jedoch zum Lösevorgang der gelbe Kupplungskopf (49) nicht angeschlossen ist, werden die am Bremsdruckanschluß (2) angeschlossenen Druckräume, d. h. die Betriebsbremskammern der Federspeicherbremszylinder, entlüftet, so daß die Bremse gelöst ist.

Es sei angemerkt, daß es möglich ist, unter Verwendung der hier dargelegten Ventileigenschaften die in Schieberventilausführung ausgebildeten Ventilbereiche [(2), (10), (13), (14), (15); bzw. (21), (10), (45), (43), (44)] des Anhängerbremsventils (8) auch in Sitzventilausführung auszubilden.

Obwohl das erfindungsgemäße Anhängerbremsventil in erster Linie für Anhängerbremsanlagen mit elektronischer Bremskraftregelung konzipiert ist, läßt sich, unter der Voraussetzung, daß dort die gesetzlichen Forderungen bezüglich des Bremszeitverhaltens erfüllt sind, das Gerät in unveränderter Form auch in konventionellen Anlagen einsetzen. Die erläuterte Sicherheit gegen ein selbsttätiges Wegrollen ist dann auch in diesen Anlagen wirksam. Weiter sind die reduzierten Herstell- und Installationskosten ebenfalls vorteilhaft.

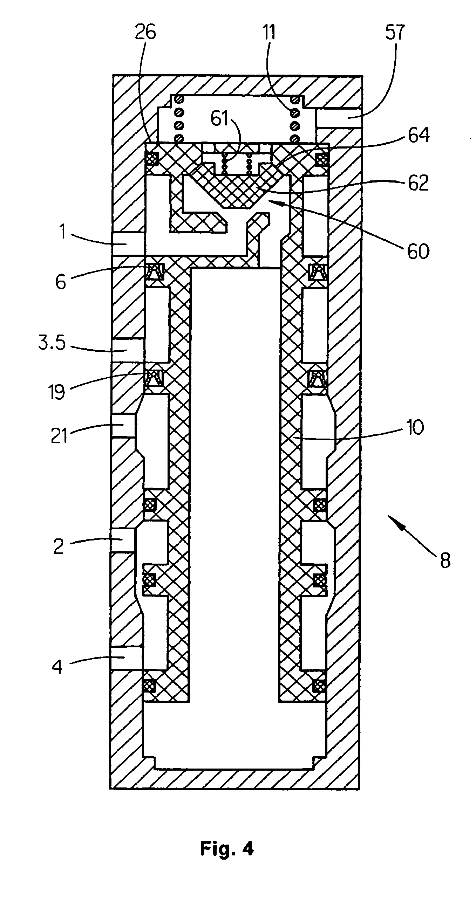

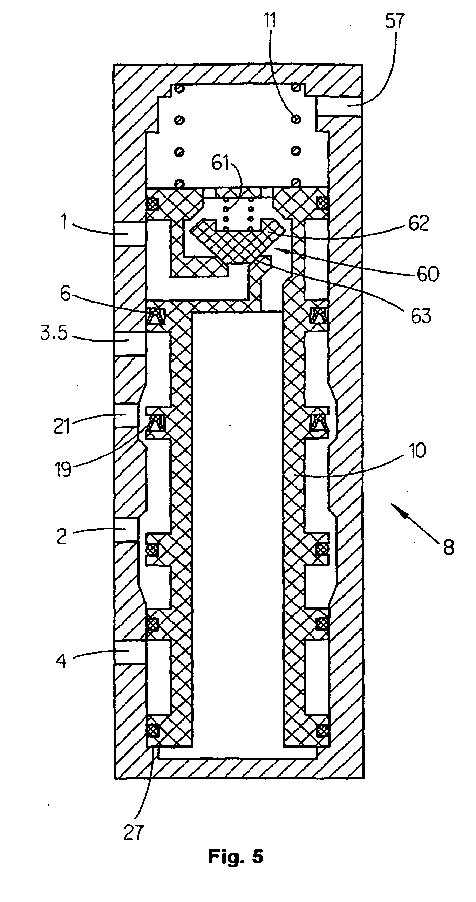

In den Darstellungen nach Fig. 4 und Fig. 5 ist das erfindungsgemäße Anhängerbremsventil in einer Ausführungsform als Schieberventil gezeigt, bei der die Schieberbetätigung ausschließlich vom am Versorgungsanschluß (1) anliegenden Druck abhängt, d. h. bei welcher der am Behälteranschluß (3) anliegende Druck keine Kraft auf den Ventilschieber (10) ausübt. Hierzu ist das Anhängerbremsventil (8) als druckentlastetes Ventil aufgebaut, bei dem auf den Ventilschieber (10) von keinem anderen Anschluß, außer dem Versorgungsanschluß (1), welcher über eine unten erläuterte Wirkfläche krafterzeugend auf diesen einwirkt, eine Druckkraft erzeugt wird.

Da die in Fig. 2 und Fig. 3 mit den Anschlüssen des Anhängerbremsventils verbundenen, in Fig. 1 ausführlich dargestellten und in Fig. 2, Fig. 3 in vereinfachter Form gezeigten, Komponenten oben ausführlich erläutert sind, beschränkt sich die Darstellung in Fig. 4 und Fig. 5 auf die Erklärung der Ventil-Funktionsweise unter Bezug auf die Ventilanschlüsse. Der Klarheit wegen sei ergänzt, daß sich das Anhängerbremsventil (8) nach Fig. 4 und Fig. 5 in identischer Weise wie das Anhängerbremventil nach Fig. 2 und Fig. 3 in einer Anhänger-EBS-Bremsanlage nach Fig. 1 betreiben läßt.

Der Übersichtlichkeit halber sind in Fig. 4 und Fig. 5 Pneumatikschaltbilder, wie sie in den unteren Teilen von Fig. 2 und Fig. 3 gezeigt sind, weggelassen, da die zu Fig. 4 und Fig. 5 gehörenden Pneumatikschaltbilder hierzu grundsätzlich gleichartig sind; es besteht lediglich der Unterschied, daß, wie erläutert, der Ventilschieber-Kolben (10) nach Fig. 4 und Fig. 5 nicht von der Druckdifferenz zwischen dem Versorgungsanschluß (1) und dem Behälteranschluß (3) betätigt, sondern ausschließlich durch den Druck am Versorgungsanschluß (1) geschaltet wird.

In Fig. 4 und Fig. 5 sind also der Versorgungsanschluß (1), der Bremsvorgabeanschluß (4), der Behälteranschluß (3) und der Bremsdruckanschluß (2) gezeigt, wobei der Löseanschluß (5) pneumatisch mit dem Behälteranschluß (3) verbunden ist. Zusätzlich ist eine Entlüftung (57) zur Atmosphäre vorgesehen. Der Ventilschieber (10) ist wie erwähnt als Ventilschieber-Kolben ausgebildet, d. h. er vereinigt die Funktionen des vorstehend erläuterten Ventilschiebers (10) und des Betätigungskolbens (7).

Der Ventilschieber (10) ist mit der Rückstellfeder (11) belastet und weist zwei Stellungen auf; eine in Fig. 4 dargestellte Grundstellung, bei der der Ventilschieber (10) am ersten Anschlag (26) anliegt, und eine in Fig. 5 gezeigte Abrißstellung, bei der der Ventilschieber(10) am zweiten Anschlag (27) zur Anlage kommt.

Durch eine auf den Ventilschieber (10) über die erwähnte Wirkfläche einwirkende Druckkraft ist bei druckbeaufschlagtem Versorgungsanschluß [Fig. 4] die Grundstellung eingenommen, während die Abrißstellung [Fig. 5] durch die Wirkung der Rückstellfeder (11) eingenommen ist, wenn der Versorgungsanschluß (1) drucklos ist.

Das vorstehend erläuterte zweite Rückschlagventil (6) ist in Fig. 4, Fig. 5 als Nutring realisiert. Durch diese Rückschlagfunktion und die in der Ventil-Grundstellung nach Fig. 4 gezeichneten Stellung des Ventilschiebers (10) sind die vorstehend erläuterten Verbindungen (G1) [pneumatische Verbindung Versorgungsanschluß (1) mit Behälteranschluß (3)] und (G2) [pneumatische Verbindung Bremsdruckanschluß (2) mit Bremsvorgabeanschluß (4)] realisiert. In der Ventil-Abrißstellung nach Fig. 5 sind bei der gezeigten Stellung des Ventilschiebers (10) die vorstehend erläuterten Verbindungen (A1) [pneumatischer Abschluß Versorgungsanschluß (1)] und (A2) [pneumatische Verbindung Bremsdruckanschluß (2) mit Behälteranschluß (3)] realisiert.

In der Grundstellung [Fig. 4] wird der separat ausgebildete Parkanschluß (21) vom Vorratsdruck-Behälter (9) am Behälteranschluß (3) über das erste Rückschlagventil (19), welches ebenfalls als Nutring ausgebildet ist, belüftet. Dagegen ist durch die konkave Gehäuseverengung am Parkanschluß (21), die in der Abrißstellung [Fig. 5] wirksam ist, in dieser Stellung eine direkte pneumatische Verbindung zwischen dem Behälteranschluß (3) und dem Parkanschluß (21) hergestellt.

Im Ventilschieber (10) ist ein Vorsteuerventil (60) integriert, welches aus einem Ventilschaltglied (62), einer auf das Ventilschaltglied (62) einwirkenden Feder (61), einem ersten Ventilsitz (63) und einem zweiten Ventilsitz (64) besteht.

Entsprechend seinen beiden Ventilsitzen weist das Vorsteuerventil (60) zwei Stellungen, eine Ausgangsstellung und eine Schaltstellung, auf. Die Ausgangsstellung des Vorsteuerventils (60) ist in Fig. 5 gezeigt: In der Abrißstellung liegt kein Druck am Versorgungsanschluß (1) an, und durch die Wirkung der Feder (61) liegt das Ventilschaltglied (62) am ersten Ventilsitz (63) an, wodurch der auf den Ventilschieber (10) wirkende Druckraum gegenüber dem Versorgungsanschluß (1) abgedichtet ist. Wird an einem abgestellten Anhänger [Abriß-Stellung nach Fig. 5] der Vorrats-Druckschlauch (30) angeschlossen, so steigt der Druck am Versorgungsanschluß (1) an, und entsprechend des jeweils anliegenden Drucks und des wirksamen Durchmessers (65) am ersten Ventilsitzes (63) wird eine Druckkraft auf das Ventilschaltglied (62) ausgeübt. Dieser wirksame Durchmesser (65) bestimmt mit den Eigenschaften der Feder (61) [Federlänge und Federkonstante] eine Druckschwelle, bei deren Überschreitung das Ventilschaltglied (62) vom ersten Ventilsitz (63) abhebt.

Das Ventilschaltglied (62) ist in seiner Kegelform derart ausgelegt, daß nach dem Abheben vom ersten Ventilsitz (63) der Druck am Versorgungsanschluß (1) nun auf eine größere Fläche einwirkt, wodurch das Vorsteuerventil (60) umschaltet, indem die Druckkraft die Kraft der Feder (61) überwindet, und entsprechend der in Fig. 4 gezeigten Schaltstellung des Vorsteuerventils (60) das Ventilschaltglied (62) gegen den zweiten Ventilsitz (64) presst, und diesen schließt.

Mit dem Übergang in die Schaltstellung des Vorsteuerventils (60) wird die auf den Ventilschieber (10) einwirkende Druckkraft schlagartig erhöht, und der Ventilschieber wird, ausgehend von seiner Stellung in Fig. 5, bei der er am zweiten Anschlag (27) anliegt, gegen die Kraft der Rückstellfeder (11), an den ersten Anschlag (26) geschoben; dadurch hat das Anhängerbremsventil (8) seine Grundstellung eingenommen.

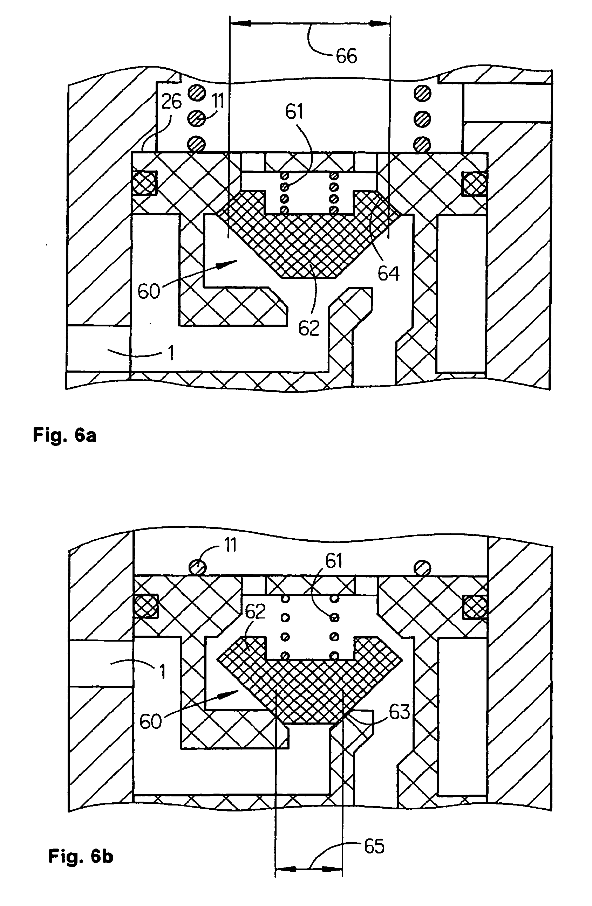

Im Vergleich zum wirksamen Durchmesser (65) in der Ausgangsstellung des Vorsteuerventils (60) nach Fig. 6b ist in der Schaltstellung des Vorsteuerventils (60) nach Fig. 6a der wirksame Durchmesser (66) erhöht; hierdurch wird eine Schalthysterese eingeführt.

Durch die Schalthysterese wird bewirkt, daß das Anhängerbremsventil nicht bei z. B. einer kurzzeitigen Unterschreitung der erläuterten Druckschwelle wieder in die Abrißstellung nach Fig. 5 übergeht. Um von der Schaltstellung [Fig. 4] zur Abrißstellung [Fig. 5] überzugehen, muß der Druck am Versorgungsanschluß (1) nämlich derart abgesunken sein, daß das Ventilschaltglied (62) durch die Kraft der Feder (61) wieder auf den ersten Ventilsitz (63) gedrückt wird. Erst dann wird der Ventilschieber (10) durch die Kraft der Rückstellfeder (11) wieder an den der Abrißstellung entsprechenden zweiten Anschlag (27) zurückgeschoben.

Geht man von einem üblichen Solldruck im Vorrats-Druckschlauch von 8 bar aus, so wird die Druckschwelle z. B. zweckmäßigerweise auf 3,5 bar gelegt. Die erläuterte Schalthysterese kann z. B. so ausgelegt werden, daß die Abrißstellung des Anhängerbremsventils bei Unterschreiten eines Druckes von 2,5 bar wieder eingenommen wird.

Der erste Ventilsitz (63) wirkt als Belüftungsitz und der zweite Ventilsitz (64) als Entlüftungssitz; bei der Entlüftung des Anhängerbremsventils (8), d. h. beim Übergang des Ventilschiebers (10) bei geöffnetem zweiten Ventilsitz (64) [Fig. 5] vom ersten Anschlag (26) zum zweiten Anschlag (27), besteht der Vorteil, daß die Entlüftung direkt zur Atmosphäre erfolgt und keine atmenden Räume vorliegen, wie dies bei konventionellen Anhängerbremsventilen der Fall ist. Atmende Räume haben den Nachteil, daß Feuchtigkeit in das Gerät eindringen kann, was unter Umständen zu Vereisungen führt. Gegenüber konventionellen Anhängerbremsventilen besteht auch der Vorteil, daß die Ventilumschaltung sofort wirksam ist und nicht zuerst eine Kennlinie durchfahren werden muß.

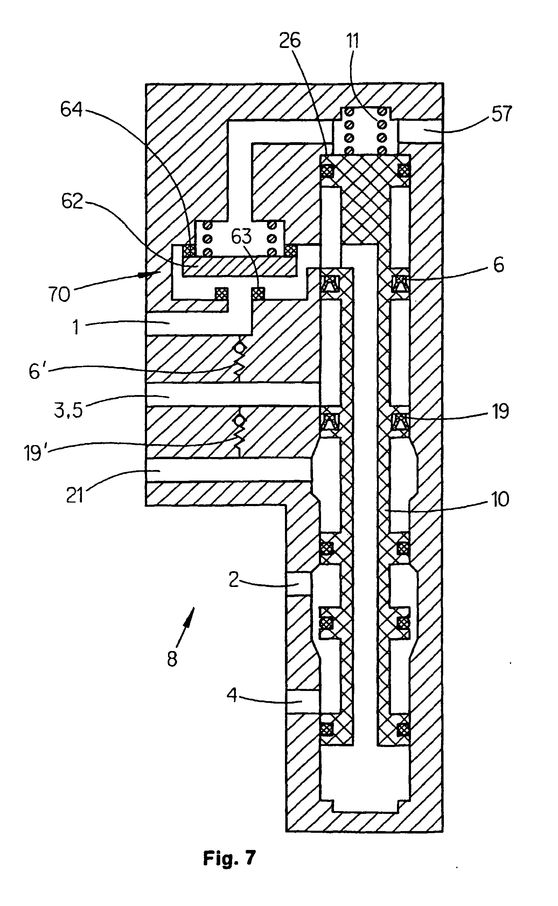

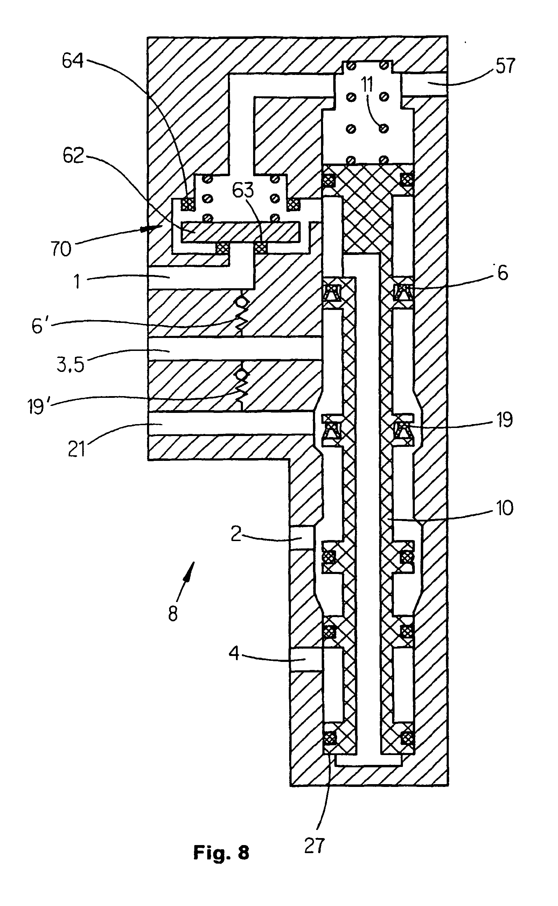

In den Ausführungsformen nach Fig. 7 und Fig. 8 [die Rückschlagventile (6') und (19') seien zunächst nicht implementiert] ist das Vorsteuerventil (60) nicht mehr im Ventilschieber (10) integriert, sondern als separates 3/2-Wegeventil (70) ausgeführt. Das Ventilschaltglied (62) ist als übliches Sitzventil-Schaltelement ausgebildet, das in der Abrißstellung [Fig. 8] am ersten Ventilsitz (63) und in der Grundstellung [Fig. 7] an dem zweiten Ventilsitz (64) anliegt. Die Funktion ist gleichartig zu den Ausführungsformen nach Fig. 4 und Fig. 5 mit der einen Ausnahme, daß nach dem Anschluß des Vorrats-Druckschlauches (30) die Belüftung des Vorratsdruck-Behälters (9) über den Behälteranschluß (3), welche über das als Nutring ausgebildete zweite Rückschlagventil (6) erfolgt, erst stattfindet, wenn das 3/2-Wegeventil (70) von seiner Ausgangsstellung [Fig. 8] in seine Schaltstellung [Fig. 7] übergegangen ist, da der Druck des Versorgungsanschlußes (1) dann am zweiten Nutring-Rückschlagventil (6) ebenfalls anliegt.

Eine zu Fig. 7, 8 geänderte Ausführungsform liegt vor, wenn die Rückschlagventile (6) und (19) nicht als Nutringe im Ventilschieber (10) realisiert, sondern als separate, im Gehäuse angeordnete Rückschlagventile (6') und (19') ausgeführt sind. Die Nutringe (6) und (19) sind dann durch entsprechende O-Ringe ersetzt. Hier entfällt die im Zusammenhang mit Fig. 7, 8 erläuterte Einschränkung, daß die Belüftung des Vorratsdruck-Behälters (9) erst nach dem Übergang des 3/2-Wegeventil (70) in seine Schaltstellung erfolgt.

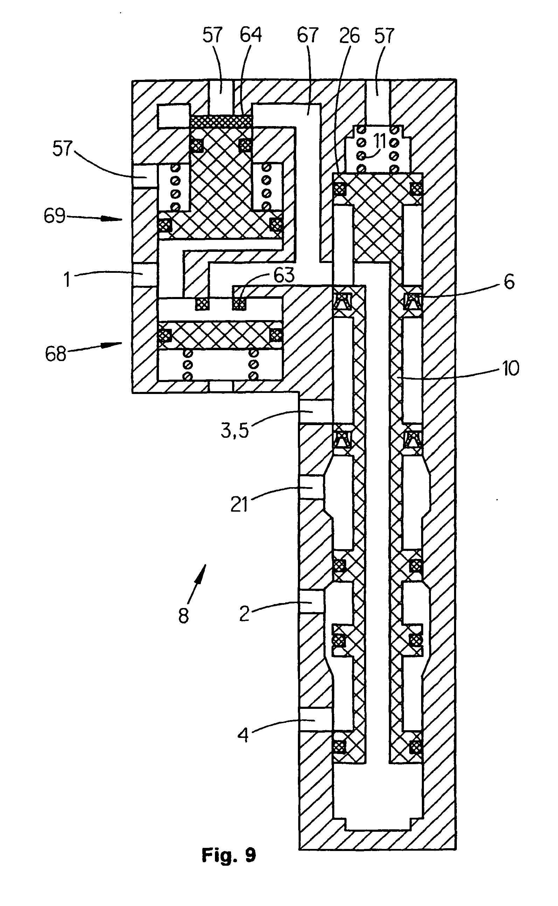

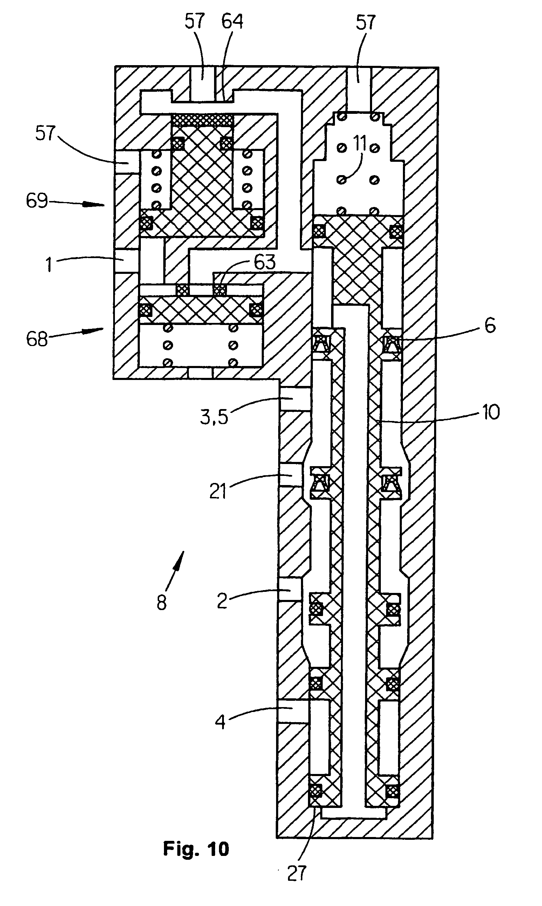

Die Darstellungen nach Fig. 9 und Fig. 10 zeigen die Ausführungsform nach Fig. 7, Fig. 8, bei denen statt eines 3/2-Wegeventils (70) zwei 2/2-Wegeventile, ein erstes 2/2-Wegeventil (68) als Belüftungsventil und ein zweites 2/2-Wegeventil (69) als Entlüftungsventil vorgesehen sind. In der Grundstellung nach Fig. 9 ist das erste 2/2-Wegeventil (68) geöffnet, das entsprechende Ventilschaltglied ist vom ersten Ventilsitz (63) abgehoben, so daß eine Belüftung durch den Versorgungsanschluß (1) erfolgt; dagegen ist das zweite 2/2-Wegeventil (69) geschlossen, der zweite Ventilsitz (64) ist geschlossen, so daß entsprechend der oben erläuterten Grundstellungs-Funktion der Ventilschieber (10) per Duckkraft an den ersten Anschlag (26) geschoben ist.

In der Abrißstellung nach Fig. 10 ist dagegen das zweite 2/2-Wegeventil (69) geöffnet; der geöffnete zweite Ventilsitz (64) ermöglicht eine Entlüftung des auf den Ventilschieber (10) wirkenden Druckraumes, so daß über die Rückstellfeder (11) die Abrißstellung am zweiten Anschlag (27) eingenommen ist. In dieser Stellung ist das erste 2/2-Wegeventil (68) [erster Ventilsitz (63)] geschlossen, so daß der Druckraum (67), wie oben erläutert, vom Versorgungsanschluß (1) abgetrennt ist.

## Patentansprüche

1. Ventileinrichtung für einen mit einem Zugfahrzeug verbindbaren Anhänger mit folgenden Merkmalen:
a) die Ventileinrichtung weist ein Anhängerbremsventil (8), ein Betriebsbrems-Löseventil (33) sowie ein Parkventil (20) auf,
b) das Anhängerbremsventil (8) weist
b1) einen über das Betriebsbrems-Löseventil (33) von dem Vorratsdruck des Zugfahrzeugs gespeisten Versorgungsanschluss (1),
b2) einen vom Bremsdruck des Zugfahrzeugs gespeisten Bremsvorgabeanschluss (4),
b3) einen mit einem Vorrats-Druckbehälter (9) des Anhängers verbundenen Behälteranschluss (3),
b4) einen Bremsdruckanschluss (2) zur Ausgabe des Bremsdrucks, ggf. über eine Drucksteuereinrichtung (29, 42), an Betriebsbremskammern von in dem Anhänger vorgesehenen Federspeicherbremszylindern (38, 39, 40, 41),
b5) sowie einen Parkanschluss (21) auf, der über das Parkventil (20) mit den Lösekammern der Federspeicherbremszylinder (38, 39, 40, 41), ggf. unter Verwendung weiterer Pneumatikschaltelemente (52), verbindbar ist,
c) das Betriebsbrems-Löseventil (33) und das Parkventil (20) ist über einen jeweiligen Betätigungsknopf manuell betätigbar,
d) das Betriebsbrems-Löseventil (33) weist eine Fahrstellung und eine Lösestellung auf, wobei in der Lösestellung der Vorrats-Druckbehälter(9) des Anhängers mit dem Versorgungsanschluss (1) des Anhängerbremsventils verbunden ist, wobei für den Anschluß des Betriebsbrems-Löseventils (33) ein Löseanschluß (5) vorgesehen ist, welcher durch eine im Anhängerbremsventil (8) bestehende direkte pneumatische Verbindung mit dem Behälteranschluß (3) verbunden ist,
e) das Parkventil (20) weist eine Fahrstellung und eine Parkstellung auf, wobei in der Parkstellung ein zu den Lösekammern der Federspeicherbremszylinder (38, 39, 40, 41) führender Anschluß (51) des Parkventils entlüftet wird,
f) bei druckbeaufschlagtem Versorgungsanschluss (1) ist der am Bremsdruckanschluss (2) anliegende Druck vom am Bremsvorgabeanschluss (4) anliegenden Druck abhängig;
g) bei drucklosem Versorgungsanschluss (1) ist der Bremsdruckanschluss (2) pneumatisch mit dem Behälteranschluss (3) verbunden;
h) der Parkanschluss (21) ist über ein erstes Rückschlagventil (19) mit dem Vorrats-Druckbehälter (9) des Anhängers verbunden;
i) bei drucklosem Versorgungsanschluss (1) ist die Wirkung des ersten Rückschlagventils (19) aufgehoben.

2. Ventileinrichtung nach Anspruch 1, **dadurch gekennzeichnet, daß** zur Aufhebung der Wirkung des ersten Rückschlagventils (19) ein parallel zum ersten Rückschlagventil (19) angeordneter Bypasskanal (46) vorgesehen ist.

3. Ventileinrichtung nach Anspruch 2, **gekennzeichnet durch** die folgenden Merkmale:
a) Das erste Rückschlagventil (19) ist im Anhängerbremsventil (8) angeordnet;
b) der Bypasskanal(46) ist im Anhängerbremsventil (8) angeordnet.

## Claims

1. Valve device for a trailer connectible to a towing vehicle, having the following features:
a) the valve device has a trailer brake valve (8), a service brake release valve (33) and a parking valve (20),
b) the trailer brake valve (8) has
b1) a supply port (1) fed *via* the service brake release valve (33) from the supply pressure of the towing vehicle,
b2) a braking instruction port (4) fed from the braking pressure of the towing vehicle,
b3) a reservoir port (3) connected to a supply pressure reservoir (9) of the trailer,
b4) a braking pressure port (2) for delivering the braking pressure, optionally *via* a pressure control device (29, 42), to service brake chambers of spring-loaded brake cylinders (38, 39, 40, 41) provided in the trailer,
b5) and a parking port (21) which is connectible *via* the parking valve (20) to the release chambers of the spring-loaded brake cylinders (38, 39, 40, 41), optionally using further pneumatic switching elements (52),
c) the service brake release valve (33) and the parking valve (20) are each manually operable via a respective operating button,
d) the service brake release valve (33) has a drive position and a release position, the supply pressure reservoir (9) of the trailer being connected in the release position to the supply port (1) of the trailer brake valve, a release port (5) being provided for the connection of the service brake release valve (33), which port is connected to the reservoir port (3) by a direct pneumatic connection in the trailer brake valve (8),
e) the parking valve (20) has a drive position and a parking position, a port (51) of the parking valve leading to the release chambers of the spring-loaded brake cylinders (38, 39, 40, 41) being vented in the parking position,
f) when the supply port (1) is acted upon by pressure, the pressure present at the braking pressure port (2) is dependent upon the pressure present at the braking instruction port (4);
g) when the supply port (1) is without pressure, the braking pressure port (2) is pneumatically connected to the reservoir port (3);
h) the parking port (21) is connected *via* a first non-return valve (19) to the supply pressure reservoir (9) of the trailer;
i) when the supply port (1) is without pressure, the action of the first non-return valve (19) is cancelled.

2. Valve device according to claim 1, **characterized in that** for cancelling the action of the first non-return valve (19) there is provided a by-pass channel (46) arranged parallel to the first non-return valve (19).

3. Valve device according to claim 2, **characterized by** the following features:
a) the first non-return valve (19) is arranged in the trailer brake valve (8);
b) the by-pass channel (46) is arranged in the trailer brake valve (8).

## Revendications

1. Agencement de valve pour une remorque susceptible d'être reliée à un véhicule tracteur, présentant les éléments suivants :
a) l'agencement de valve comprend une valve de frein de remorque (8), une valve de desserrage de frein de fonctionnement (33) ainsi qu'une valve de stationnement (20),
b) la valve de frein de remorque (8) comprend
b1) un raccord d'alimentation (1) alimenté en pression de réserve du véhicule tracteur via la valve de desserrage de frein de fonctionnement (33),
b2) un raccord d'imposition de freinage (4) alimenté en pression de freinage du véhicule tracteur,
b3) un raccord de récipient (3) relié à un récipient à pression de réserve (9) de la remorque,
b4) un raccord de pression de freinage (2) pour fournir une pression de freinage, le cas échéant via un dispositif de commande de pression (29, 42), à des chambres de frein de fonctionnement de cylindres de frein à accumulateur (38, 39, 40, 41) prévus dans la remorque,
b5) ainsi qu'un raccord de stationnement (21) qui est susceptible d'être relié aux chambres de desserrage des cylindres de frein à accumulateur (38, 39, 40, 41) via la valve de stationnement (20), le cas échéant en utilisant d'autres éléments de commutation pneumatiques (52),
c) la valve de desserrage de frein de fonctionnement (33) et la valve de stationnement (20) sont actionnables manuellement chacun via un bouton d'actionnement respectif,
d) la valve de desserrage de frein de fonctionnement (33) présente une position de circulation et une position de desserrage, et dans la position de desserrage le récipient à pression de réserve (9) de la remorque est relié au raccord d'alimentation (1) de la valve de frein de remorque, où pour le raccord de la valve de desserrage de frein de fonctionnement (33) il est prévu un raccord de desserrage (5) qui est relié au raccord de récipient (3) par une liaison pneumatique directe située dans la valve de frein de remorque (8),
e) la valve de stationnement (20) présente une position de circulation et une position de stationnement, et dans la position de stationnement un raccord (51) de la valve de stationnement, menant aux chambres de desserrage des cylindres de frein à accumulateur (38, 39, 40, 41), est purgé,
f) lorsque le raccord d'alimentation (1) est sollicité en pression, la pression appliquée au raccord de pression de freinage (2) dépend de la pression appliquée au raccord d'imposition de freinage (4),
g) lorsque le raccord d'alimentation (1) est sans pression, le raccord de pression de freinage (2) est relié sur le plan pneumatique au raccord de récipient (3),
h) le raccord de stationnement (21) est relié au récipient à pression de réserve (9) de la remorque via un premier clapet antiretour (19),
i) lorsque le raccord d'alimentation (1) est sans pression, l'action du premier clapet antiretour (19) est annulée.

2. Agencement de valve selon la revendication 1, **caractérisé en ce que** pour annuler l'action du premier clapet antiretour (19), il est prévu un canal de by-pass (46) agencé parallèlement au premier clapet antiretour (19).

3. Agencement de valve selon la revendication 2, **caractérisé par** les éléments suivants :
a) le premier clapet antiretour (19) est agencé dans la valve de frein de remorque (8),
b) le canal de by-pass (46) est agencé dans la valve de frein de remorque (8).
